# EUROPÄISCHE PATENTSCHRIFT

(11) **EP 3 574 167 B1**
(45) Veröffentlichungstag und Bekanntmachung des Hinweises auf die Patenterteilung: **18.10.2023**
(21) Anmeldenummer: 17705300.6
(22) Anmeldetag: 27.01.2017
(51) Int. Cl.: E04G 17/06, F16B 19/02, E04G 17/065, F16B 33/00, F16B 39/02, F16B 43/02

(54) **ABDICHTUNG EINER DURCHFÜHRUNG EINES ANKERSTABS DURCH EIN RAHMENSCHALELEMENT**
SEALING A LEAD-THROUGH OF A ANCHOR ROD THROUGH A PANEL FORMWORK ELEMENT
SYSTÈME D'ÉTANCHÉITÉ D'UN PASSAGE D'UNE TIGE D'ANCRAGE À TRAVERS UN ÉLÉMENT DE COFFRAGE CADRE

(43) Veröffentlichungstag der Anmeldung: 04.12.2019
(73) Patentinhaber: MEVA Schalungs-Systeme GmbH, 72221 Haiterbach (DE)
(72) Erfinder: DINGLER, Gerhard, 72221 Haiterbach (DE); SCHRAMM, Uwe, 72160 Horb-Mühringen (DE); SCHILLE, Rick, 72224 Ebhausen (DE)
(74) Vertreter: Witte, Weller & Partner Patentanwälte mbB
(86) Internationale Anmeldenummer: PCT/DE2017/100056
(87) Internationale Veröffentlichungsnummer: WO 2018/137728

(56) Entgegenhaltungen:
- DE-U- 1 877 701
- US-A- 1 667 253

## Beschreibung

Die Erfindung ist auf eine Abdichtung einer Durchführung eines Ankerstabs durch ein Rahmenschalelement einer Betonschalung gerichtet. Sie betrifft ein Verfahren zum Aufstellen einer Betonschalung mit Merkmalen des Oberbegriffs des Anspruchs 1, eine Dichtungsanordnung mit den Merkmalen des Oberbegriffs des Anspruchs 6 und eine Schalungsanordnung mit den Merkmalen des Oberbegriffs des Anspruchs 8. Vorgesehen ist die Abdichtung für eine einseitige Ankerung zweihäuptiger Schalungen.

Zweihäuptige Schalungen sind Wandschalungen, für die Rahmenschalelemente mit Abstand einander gegenüber aufgestellt werden. Dabei sind Vorderseiten der Rahmenschalelemente einander zugewandt. Die Vorderseiten der Rahmenschallemente sind die Seiten, die mit dem Beton in Berührung kommen. Sie weisen eine als Schalhaut bezeichnete Platte aus Holz oder aus Kunststoff auf, die auf einem Metallrahmen angebracht ist, der die Schalhaut versteift. Der Rahmen eines Rahmenschalelements ist auf einer dem Beton abgewandten Rückseite der Schalhaut angebracht. In einen Zwischenraum zwischen den mit Abstand einander gegenüber aufgestellten Rahmenschalelementen wird Beton in fließfähigem Zustand zur Herstellung einer Wand gefüllt. Um einem Betondruck des fließfähigen Betons zu widerstehen, werden die gegenüberstehenden Rahmenschalelemente mit Ankerstäben, welche an Ankerstellen durch Ankerlöcher der Rahmenschalelemente hindurch gehen, zusammengehalten. Die Ankerstäbe überbrücken den Abstand zwischen den gegenüberstehenden Rahmenschalelementen und sind an einander abgewandten Rückseiten der Rahmenschalelemente beispielsweise mit aufgeschraubten Muttern festgelegt. Es genügt eine zugfeste Verbindung, die verhindert, dass sich die gegenüberstehenden Rahmenschalelemente voneinander entfernen.

Mit einseitiger Ankerung ist gemeint, dass die Verankerung, das heißt die Verbindung der gegenüberstehenden Rahmenschalelemente mit Ankerstäben, von der Rückseite eines der beiden Rahmenschalelemente erfolgt. Das gegenüberstehende Rahmenschalelement muß nicht zugänglich sein. Die Ankerstäbe werden durch die Ankerlöcher in den Schalhäuten der gegenüberstehenden Rahmenschalelemente gesteckt. Die Rahmen der Rahmenschalelemente weisen entweder ebenfalls Ankerlöcher auf, die deckungsgleich mit den Ankerlöchern in den Schalhäuten sind, oder die Ankerlöcher in den Schalhäuten befinden sich neben Streben der Rahmen und die Ankerstäbe werden neben den Streben vorbei geführt. Zur Festlegung an einem gegenüberstehenden Rahmenschalelement, das nicht zugänglich sein muss, werden beispielsweise die Ankerstäbe, die zumindest dort ein Gewinde aufweisen, in Innengewinde der gegenüberstehenden Rahmenschalelemente geschraubt. Auf der zugänglichen Rückseite der einen Rahmenschalelemente wird beispielsweise eine Mutter auf die Ankerstäbe geschraubt. Die Festlegung der Ankerstäbe an den Rahmenschalelementen ist nicht eigentlicher Gegenstand der Erfindung. Zwar ist die Erfindung wie oben geschrieben an sich für eine einseitige Ankerung zweihäuptiger Schalungen vorgesehen, allerdings sind andere Verwendungen nicht ausgeschlossen.

Die Offenlegungsschrift DE 102 45 187 A1 offenbart eine zweihäuptige Schalung mit parallel zueinander und in Abstand voneinander angeordneten Schalhäuten, die miteinander fluchtende Ankerlöcher aufweisen, durch die ein Gewindestab als Ankerstab gesteckt ist. Der Ankerstab steht auf beiden Seiten von einander abgewandten Rückseiten der Schalhäute ab und es sind Flügelmuttern auf den Rückseiten der Schalhäute auf den Ankerstab geschraubt, die die Schalhäute gegen einen Betondruck zwischen die Schalhäute gefüllten, fließfähigen Betons abstützen. Zwischen den beiden Schalhäuten ist ein Hüllrohr auf dem Ankerstab angeordnet, das zum einen eine Wiedergewinnung des Ankerstabs durch Herausziehen nach einem Betoniervorgang ermöglicht und das bis zum Einfüllen des Betons zwischen die Schalhäute die Schalhäute in ihrem Abstand voneinander hält. An Stirnenden des Hüllrohrs sind Dichtelemente angeordnet, die zwischen dem Hüllrohr und den Schalhäuten abdichten. Zum Anbringen des Hüllrohrs und der Dichtelemente muss die dem Beton zugewandte Vorderseite mindestens einer der gegenüberstehenden Schalhäute zugänglich sein, eine einseitige Ankerung von der Rückseite einer Schalhaut aus ist nicht möglich.

Das Patent US 1,667,253 offenbart eine Schalungsanordnung mit zwei in einem Abstand voneinander aufgestellten Rahmenschalelementen, die von einem Anker zusammengehalten werden, der aus drei miteinander verschraubten Ankerstäben zusammengesetzt ist. Zwei Klipse mit V-förmig aufspreizenden Federfingern sind an einander zugewandten Innenseiten der Rahmenschalelemente auf dem Anker angeordnet, die von Außenseiten durch Ankerlöcher in den Rahmenschalelementen durchgesteckt werden und zwischen den Rahmenschalelementen auffedern derart, dass sie die Rahmenschalelemente in ihrem Abstand voneinander halten.

Das Gebrauchsmuster DE 18 77 701 U offenbart ein Dichtelement zur Abdichtung einer Durchführung eines Ankers durch eine Schalhaut mit einem kurzen, zylinderrohrförmigen Abschnitt und einem sich an einem Ende einstückig anschließenden hohlkegelstumpfförmigen Abschnitt, dessen durchmessergrößeres Ende dem zylinderrohrförmigen Abschnitt abgewandt ist. Zur Abdichtung wird der zylinderrohrförmige Abschnitt des Dichtelements auf ein den Anker umschließendes Hüllrohr aufgesetzt derart, dass ein Ende des Hüllrohrs gegen eine Ringstufe des Dichtelements in dessen hohlzylindrischem Abschnitt stößt. Das durchmessergrößere Ende des hohlkegelstumpfförmigen Abschnitts des Dichtelements umschließt die Durchführung in der Schalhaut und liegt an einer betonzugewandten Innenseite der Schalhaut an.

Aufgabe der Erfindung ist, eine Abdichtung an einer Durchführung eines Ankerstabs durch eine Schalhaut einer Betonschalung vorzuschlagen, die von einer dem Beton abgewandten Rückseite der Schalhaut anbringbar ist.

Diese Aufgabe wird erfindungsgemäß durch die Merkmale der Ansprüche 1, 5 und 7 gelöst. Das erfindungsgemäße Verfahren mit den Merkmalen des Anspruchs 1 sieht vor, dass ein Ankerstab von einer Rückseite, also von einer dem Beton abgewandten Seite, durch ein dafür vorgesehenes Ankerloch in einer Schalhaut eines Rahmenschalelements gesteckt wird. Rahmenschalelemente weisen üblicherweise mehrere Ankerlöcher zum Durchstecken von Ankerstäben auf, wobei die Ankerlöcher üblicherweise in einem Raster angeordnet sind. Zweihäuptige Schalungen werden so aufgestellt, dass die Ankerlöcher in den gegenüberstehenden Rahmenschalelementen miteinander fluchten, so dass ein Ankerstab durch beide Schalhäute gesteckt werden kann. Die Schalhäute der gegenüberstehenden Rahmenschalelemente befinden sich an einander zugewandten Vorderseiten der Rahmenschalelemente. Bei einer zweihäuptigen Schalung wird ein Ankerstab von einer Rückseite eines Rahmenschalelements durch die fluchtenden Ankerlöcher der Schalhäute beider gegenüberstehender Rahmenschalelemente gesteckt und zur Festlegung des Ankerstabs am gegenüberstehenden Rahmenschalelement, das nicht zugänglich sein muss, beispielsweise in ein Innengewinde geschraubt. Dazu muss der Ankerstab in dem Bereich, in dem er in das Innengewinde geschraubt wird, ein Gewinde aufweisen. Andere Festlegungen des Ankerstabs am gegenüberstehenden Rahmenschalelement sind nicht ausgeschlossen, die Art der Festlegung des Ankerstabs an den Rahmenschalelementen ist nicht der eigentliche Gegenstand der Erfindung. Auf der zugänglichen Rückseite des einen Rahmenschalelements kann der Ankerstab beispielsweise durch Aufschrauben einer Mutter festgelegt werden, wofür er auch in diesem Bereich ein Gewinde benötigt. Andere Arten der Festlegung des Ankerstabs an den Rahmenschalelementen sind möglich, auch gewindelose Festlegungsmöglichkeiten. Sofern sich die Ankerlöcher in den Schalhäuten neben Streben der Rahmen befinden, wird der Ankerstab neben den Streben der Rahmen vorbei geführt. Sind die Ankerlöcher in den Schalhäuten von Streben der Rahmen überdeckt, weisen die Streben der Rahmen ebenfalls Ankerlöcher auf, die mit den Ankerlöchern in den Schalhäuten fluchten, und der Ankerstab wird von der Rückseite des Rahmenschalelements durch die Ankerlöcher im Rahmen und in der Schalhaut durchgesteckt.

Vor dem Durchstecken durch das Rahmenschalelement ist oder wird ein rohr- oder ringförmiges Dichtelement auf dem Ankerstab angeordnet, das auf dem Ankerstab längs verschieblich ist und das zusammen mit dem Ankerstab gegebenenfalls durch das Ankerloch im Rahmen und durch das Ankerloch in der Schalhaut durchgesteckt, so dass es auf der Vorderseite aus dem Ankerloch in der Schalhaut austritt. Das Dichtelement weist einen zylinderrohrförmigen Abschnitt, eine Ringstufe und einen hohlkegelstumpfförmigen Abschnitt auf, dessen durchmesserkleineres Ende über die Ringstufe einstückig in den zylinderrohrförmigen Abschnitt übergeht. Ein größter Durchmesser des Dichtelements, ist größer als ein Durchmesser des Ankerlochs in der Schalhaut. Sofern das Ankerloch in der Schalhaut keinen kreisförmigen Querschnitt aufweist, ist eine entsprechende Querabmessung anstelle des Durchmessers des Ankerlochs und des Dichtelements zu wählen. Bei einem Durchtritt des Dichtelements durch das Ankerloch in der Schalhaut verkleinert sich der größte Durchmesser des Dichtelements durch insbesondere elastische Verformung des Dichtelements auf den Durchmesser des Ankerlochs in der Schalhaut oder jedenfalls so, dass das Dichtelement durch das Ankerloch in der Schalhaut durchtreten kann. Nachdem das Dichtelement durch das Ankerloch in der Schalhaut durchgetreten ist, weitet es sich elastisch wieder auf seinen ursprünglichen Durchmesser oder jedenfalls auf einen Durchmesser auf, der größer als der Durchmesser im Ankerloch in der Schalhaut ist. Wird das Dichtelement in Anlage an die Vorderseite der Schalhaut gebracht, legt es sich abdichtend an die Schalhaut an und dichtet am Ankerloch ab. Nicht ausgeschlossen ist, dass das Dichtelement in das Ankerloch in der Schalhaut greift, wenn es abdichtend an deren Vorderseite anliegt. Das Dichtelement wird so weit durch das Ankerloch in der Schalhaut durchgeführt, dass es mit seinem größten Durchmesser auf der Vorderseite aus dem Ankerloch in der Schalhaut austritt und das Dichtelement seinen größten Durchmesser elastisch auf einen Durchmesser aufweitet, der größer als der Durchmesser des Ankerlochs in der Schalhaut ist. Es ist möglich, dass das Dichtelement Abschnitte aufweist, deren Durchmesser nicht größer als das Ankerloch ist. Beispielsweise kann das Dichtelement einen rohrförmigen Kragen aufweisen, der auf dem Ankerstab in das Ankerloch in der Schalhaut zurück ragt, wenn das Dichtelement mit seinem größten Durchmesser an der Vorderseite der Schalhaut anliegt. Eine hermetisch dichte Abdichtung ist nicht notwendig, es genügt, dass kein oder allenfalls eine geringe Menge Beton durch das Ankerloch in der Schalhaut austritt.

Auf einer Rückseite des Dichtelements wird ein Schieberohr auf dem Ankerstab angeordnet, das zusammen mit dem Ankerstab bewegt wird und beim Durchstecken des Ankerstabs durch das Ankerloch in der Schalhaut das Dichtelement durch das Ankerloch in der Schalhaut bewegt. Denkbar ist auch, das Schieberohr auf dem Ankerstab zu verschieben und dadurch das Dichtelement durch das Ankerloch in der Schalhaut zu bewegen. Denkbar ist dabei auch der Einsatz eines Werkzeuges zum Durchführen des Dichtelements durch das Ankerloch im Rahmenschalelement.

Anstatt eines Schieberohres oder eines Werkzeuges ist auch ein z. B ringförmiges kurzes Element (z. B. Scheibe), welches auf dem Ankerstab befestigt ist, denkbar. Das Element kann fest oder demontierbar mit Feststellmöglichkeit auf einer gewünschten Position auf den Ankerstab montiert sein. Das kurze Element hat den Vorteil, dass mehr Spiel zu einer Schrägstellung des Ankerstabs im Ankerloch vorhanden ist. Die Interaktion des kurzen Elementes, des Hüllrohres und des Dichtelementes gibt die Wanddicke vor.

Die Rückseite des Dichtelements ist der Schalhaut zugewandt, wenn das Dichtelement von der Rückseite zur Vorderseite der Schalhaut durch das Ankerloch in der Schalhaut bewegt worden ist. Das Schieberohr weist zumindest in einem Bereich, der in das Ankerloch in der Schalhaut gelangt, einen Durchmesser auf, der höchstens gleich groß, jedoch nicht größer als der Durchmesser des Ankerlochs in der Schalhaut ist. Sofern der Ankerstab und das Dichtelement auch durch Ankerlöcher im Rahmen des Rahmenschalelements gesteckt werden, ist auch in diesem Bereich der Durchmesser des Schieberohrs höchstens gleich groß, jedoch nicht größer als ein Durchmesser der Ankerlöcher im Rahmen des Rahmenschalelements.

In bevorzugter Ausgestaltung der Erfindung ist das Schieberohr axial auf dem Ankerstab festlegbar oder lösbar festgelegt, so dass mit dem Durchstecken des Ankerstabs durch das Ankerloch in der Schalhaut das auf dem Ankerstab axial festgelegte Schieberohr das auf dem Ankerstab angeordnete Dichtelement durch das Ankerloch in der Schalhaut schiebt. Die axiale Festlegung des Schieberohrs auf dem Ankerstab kann bei einem ein Gewinde aufweisenden Ankerstab mittels eines Innengewindes oder einer Profilierung, die mit dem Gewinde des Ankerstabs in Eingriff steht, erfolgen. Eine Axialbewegung des Ankerstabs gegenüber dem Schieberohr beispielsweise zum Spannen gegenüberstehender Rahmenschalelemente kann durch eine Drehung des Ankerstabs erfolgen, bei der das Schieberohr nicht mitdreht und sich dadurch nicht gegenüber dem Rahmenschalelement bewegt.

Eine Ausgestaltung der Erfindung sieht vor, dass das Schieberohr so lang ist wie ein Abstand einer Gegenfläche des Rahmenschalelements für ein Widerlager des Ankerstabs von einer Vorderseite der Schalhaut des Rahmenschalelements. Hinzu kommt ggf. eine Tiefe, um die das Schieberohr beim Durchschieben des Dichtelements durch das Ankerloch in der Schalhaut in das Dichtelement eindringt und/oder bei gegeneinander gespannten Rahmenschalelementen auf der Rückseite eines Rahmenschalelements übersteht. Abzuziehen ist ggf. eine Tiefe, um die das Dichtelement in das Ankerloch in der Schalhaut ragt, wenn das Dichtelement dichtend an der Schalhaut anliegt. Die Gegenfläche wird beispielsweise von der Rückseite der Schalhaut oder einer Rückseite des Rahmens des Rahmenschalelements gebildet. An der Gegenfläche des Rahmenschalelements stützt sich der Ankerstab mit seinem Widerlager oder in anderer Weise beim Spannen ab. Dadurch, dass das Schieberohr so lang ist wie der Abstand der Gegenfläche des Rahmenschalelements für das Widerlager des Ankerstabs von der Vorderseite der Schalhaut, schiebt das Schieberohr beim Durchstecken des Ankerstabs durch das Ankerloch in der Schalhaut des Rahmenschalelements das Dichtelement vollständig auf der Vorderseite der Schalhaut aus dem Ankerloch heraus, wenn das Schieberohr einen - wenn auch kleinen - Abstand vom Widerlager des Ankerstabs aufweist. Das stellt das elastische Aufweiten des Dichtelements auf der Vorderseite der Schalhaut sicher. Wird der Ankerstab anschließend gespannt, bewegt sich das Dichtelement in dichtende Anlage gegen die Vorderseite der Schalhaut und bewegt das Schieberohr zurück, so dass das Schieberohr nicht auf der Vorderseite der Schalhaut übersteht und die dichtende Anlage des Dichtelements an der Vorderseite der Schalhaut nicht behindert.

Bei einer weiteren bevorzugten Ausgestaltung der Erfindung ist oder wird auf einer Vorderseite des Dichtelements ein Hüllrohr auf dem Ankerstab angeordnet, das mit dem Ankerstab von der Rückseite der Schalhaut durch das Ankerloch in der Schalhaut durchgesteckt wird. Das Dichtelement wird mit seiner Vorderseite voran durch das Ankerloch in der Schalhaut gesteckt. Bei einer fertig errichteten zweihäuptigen Schalung reicht das Hüllrohr von dem Dichtelement an der einen Schalhaut zu einem Dichtelement an der Schalhaut eines gegenüberstehenden Rahmenschalelements. Die beiden Dichtelemente dichten zwischen dem Hüllrohr und den Schalhäuten ab. Das Hüllrohr kann zum einen als Abstandshalter für die beiden gegenüberstehenden Rahmenschalelemente einer zweihäuptigen Schalung dienen. Zum anderen ermöglicht das Hüllrohr eine Wiedergewinnung des Ankerstabs, der sich nach einem Betonieren und Ausschalen aus dem einbetonierten Hüllrohr herausziehen lässt. Ausschalen bedeutet ein Entfernen der Rahmenschalelemente von beispielsweise einer betonierten Wand. Dadurch ermöglicht die Erfindung die Verwendung eines Gewindestabs mit einem über seine gesamte Länge durchgehenden Gewinde, beispielsweise auch eines sogenannten Dywidag-Stabs als wiedergewinnbarem Ankerstab.

Eine Ausgestaltung der Erfindung sieht ein Widerlager am Ankerstab zur Abstützung auf der Rückseite der Schalhaut oder am Rahmen des Rahmenschalelements vor. Ein solches Widerlager kann beispielsweise eine auf den Ankerstab geschraubte Mutter, ein auf dem Ankerstab festes Widerlager oder ein quer auf oder durch den Anker gestecktes Widerlager sein. Die Aufzählung ist beispielhaft und nicht abschließend. Zum Durchstecken des Dichtelements durch das Ankerloch in der Schalhaut weist vorzugsweise das Schieberohr auf der Rückseite des Dichtelements einen Abstand vom Widerlager auf, so dass es das Dichtelement beim Durchstecken des Ankerstabs bis zu einer Anlage des Widerlagers am Rahmen des Rahmenschalelements oder an der Rückseite der Schalhaut das Dichtelement durch das Ankerloch in der Schalhaut und zumindest ein kurzes Stück weiter schiebt, so dass zumindest ein kleiner Abstand zwischen dem Dichtelement und der Vorderseite der Schalhaut entsteht. Dieser Abstand stellt das elastische Aufweiten des Dichtelements auf der Vorderseite der Schalhaut sicher. Bei einem Spannen zweier gegenüberstehender Rahmenschalelemente einer zweihäuptigen Schalung bewegt sich das Dichtelement in dichtende Anlage an der Vorderseite der Schalhaut und das Schieberohr zurück in das Ankerloch in der Schalhaut.

Damit sich das Dichtelement beim Bewegen in das Ankerloch in der Schalhaut auf dessen Durchmesser verengt, sieht eine Ausgestaltung der Erfindung vor, dass sich das Dichtelement in Richtung seiner Rückseite, die zum Abdichten an der Vorderseite der Schalhaut anliegt, von einem Durchmesser, der nicht größer als der Durchmesser des Ankerlochs in der Schalhaut ist, auf einen Durchmesser, der größer als der Durchmesser des Ankerlochs in der Schalhaut ist, erweitert. Vorzugsweise erweitert sich der Durchmesser des Dichtelements kontinuierlich, insbesondere kegelförmig, wobei eine Kegelfläche auch hohlrund oder ballig sein kann. Beim Bewegen des Dichtelements in das Ankerloch in der Schalhaut drückt das Ankerloch in der Schalhaut das Dichtelement an seiner Erweiterung elastisch auf den Durchmesser des Ankerlochs in der Schalhaut zusammen. Nach dem Durchtritt durch oder einem Austritt aus dem Ankerloch in der Schalhaut weitet sich das Dichtelement an seinem größten Durchmesser wieder auf einen Durchmesser auf, der größer als der Durchmesser des Ankerlochs in der Schalhaut ist, so dass das Dichtelement durch eine Rückbewegung zur Schalhaut in dichten Anlage an der Vorderseite der Schalhaut gelangt. Eine Wanddicke des Dichtelements ist nicht größer als eine Hälfte eines Durchmesserunterschieds zwischen dem Ankerloch in der Schalhaut und dem Ankerstab, so dass das Dichtelement beim Durchtritt durch das Ankerloch in der Schalhaut Platz in einem den Ankerstab im Ankerloch in der Schalhaut umgebenden Zwischenraum findet.

Die Erfindung wird nachfolgend anhand eines in der Zeichnung dargestellten Ausführungsbeispiels näher erläutert. Ausführungen der Erfindung, die nicht aller Merkmale des Ausführungsbeispiels oder eines Anspruchs aufweisen, sind möglich. Es zeigen:
Figur 1 eine Schnittdarstellung einer Abdichtung einer Durchführung eines Ankerstabs durch ein Rahmenschalelement mit einem Dichtelement;
Figur 2 eine Vergrößerung im Bereich des Dichtelements.

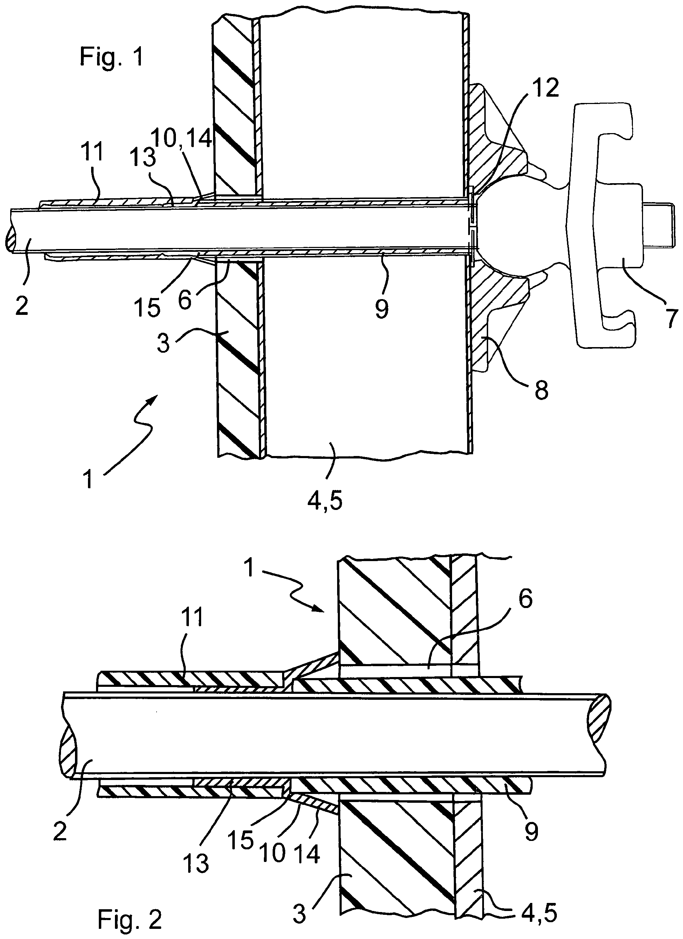

Figur 1 zeigt ein Rahmenschalelement 1 einer Schalung zum Betonieren einer Wand aus Beton im Bereich einer Durchführung eines Ankerstabs 2. Das Rahmenschalelement 1 weist eine Platte aus Holz oder aus Kunststoff als Schalhaut 3 auf, an deren hier als Rückseite bezeichneter Seite ein Rahmen 4 zur Versteifung angebracht ist. Der Rahmen 4 besteht aus zueinander parallelen und senkrechten Streben 5 aus Rechteckrohren aus Aluminium oder Stahl. Durch den Rahmen 4 und die Schalhaut 3 durchgehend sind Ankerlöcher 6 zum Durchstecken von Ankerstäben 2 angebracht. Die Ankerlöcher 6 sind in einem Raster über eine Fläche der Schalhaut 3 verteilt angeordnet.

Im dargestellten Ausführungsbeispiel der Erfindung ist der Ankerstab 2 ein Gewindestab mit durchgehendem Gewinde, und zwar ein so genannter Dywidag-Stab. Andere Gewindestäbe, konische Ankerstäbe oder sonstige Stäbe als Ankerstab 2 sind nicht ausgeschlossen. Auf dem Ankerstab 2 ist eine Mutter 7 mit einem plattenförmigen Widerlager 8 axialfest angeordnet. Die Mutter 7 kann auf den Ankerstab 2 geschraubt sein, im Ausführungsbeispiel ist sie auf den Ankerstab 2 geschraubt und quer zum Ankerstab 2 gepresst, wodurch sie drehfest und damit starr, das heißt axialfest und drehfest, mit dem Ankerstab 2 verbunden ist. Der Dywidag-Stab weist zwei zueinander parallele Flachseiten auf, die die drehfeste Verbindung der auf das Gewinde des Ankerstabs 2 geschraubte Mutter 7 verbessern.

Das Rahmenschalelement 1 ist Teil einer zweihäuptigen Schalung, das heißt dem Rahmenschalelement 1 ist mit Abstand gegenüberstehend ein weiteres, nicht gezeichnetes Rahmenschalelement 1 aufgestellt, dessen Ankerlöcher mit den Ankerlöchern 6 des einen Rahmenschalelements 1 fluchten. Dabei sind die Schalhäute 3 der gegenüberstehenden Rahmenschalelemente 1 einander zugewandt. Einander zugewandte Flächen der Schalhäute 3, die bei einem Einfüllen von Beton in einen Zwischenraum zwischen den gegenüberstehenden Rahmenschalelementen 1 zum Betonieren der Wand mit dem Beton in Berührung kommen, werden hier als Vorderseiten bezeichnet. Die gegenüberstehenden Rahmenschalelemente 1 werden von Ankerstäben 2, die durch die fluchtenden Ankerlöcher 6 in den Rahmenschalelementen 1 gesteckt sind, gegen einen Frischbetondruck in ihrem Abstand voneinander gehalten. Frischbeton meint den in fließfähigem Zustand zwischen die Rahmenschalelemente 1 eingefüllten Beton. Dabei stützen sich die Ankerstäbe 2 mit ihren Widerlagern 8 an den Rückseiten der Schalhäute 3 oder, wie gezeichnet, an den Schalhäuten 3 abgewandten Rückseiten der Rahmen 4 ab. Die Stellen, an denen sich die Widerlager 8 der Ankerstäbe 2 an den Rahmenschalelementen 1 abstützen, werden hier als Gegenflächen der Rahmenschalelemente 1 für die Widerlager 8 der Ankerstäbe 2 bezeichnet.

Die Erfindung ermöglicht eine einseitige Ankerung, das heißt die Anbringung der Ankerstäbe 2 von der zugänglichen Rückseite eines Rahmenschalelements 1 aus. Das gegenüberstehende Rahmenschalelement 1 muss nicht zugänglich sein. Erfindungsgemäß werden die Ankerstäbe 2 von der Rückseite des einen Rahmenschalelements 1 durch die Ankerlöcher 6 im Rahmen 4 und in der Schalhaut 3 des einen Rahmenschalelements 1 durchgesteckt und in die fluchtenden Ankerlöcher 6 im gegenüberstehenden, nicht gezeichneten Rahmenschalelement 1 gesteckt. Im Ausführungsbeispiel weist das gegenüberstehende, nicht gezeichnete Rahmenschalelement 1 Innengewinde auf, in die die Ankerstäbe 2 durch Drehen der auf ihm drehfesten Mutter 7 geschraubt wird.

Vor dem Durchstecken des Ankerstabs 2 durch die Ankerlöcher 6 im Rahmenschalelement 1 werden ein Schieberohr 9 auf den Ankerstab 2 geschraubt und anschließend ein Dichtelement 10 und ein Hüllrohr 11 auf den Ankerstab 2 geschoben. Das Schieberohr 9 weist ein Innengewinde auf, das mit dem Gewinde des Ankerstabs 2 in Eingriff steht, so dass es auf dem Ankerstab 2 axialfest ist. An einem hinteren, dem Widerlager 8 zugewandten Ende weist das Schieberohr 9 einen Bund 12 auf, mit dem es sich am Widerlager 8 abstützt.

Im gezeichneten Ausführungsbeispiel ist das Schieberohr 9 etwas länger als das Rahmenschalelement 1, das heißt die Schalhaut 3 und der Rahmen 4 zusammen dick sind, so dass das Dichtelement 10 mit dem Schieberohr 9 so weit durch das Rahmenschalelement 1 durchgeschoben werden kann, dass sein hohlkegelstumpfförmiger Abschnitt 14 auf der Vorderseite der Schalhaut 3 aus dem Ankerloch 6 austritt und auffedern kann. Damit bei nicht fluchtenden Ankerlöchern 6 in gegenüberstehenden Rahmenschalelementen 1 der Ankerstab 2 schief gestellt werden kann, kann auch ein kürzeres Schieberohr 9 verwendet werden, das beispielsweise nicht länger als sein Durchmesser ist (nicht dargestellt). Hinter einem so kurzen Schieberohr 9 ermöglicht ein den Ankerstab 2 im Ankerloch 6 umschließender Spalt die Schrägstellung des Ankerstabs 2. Um das Dichtelement 10 mit dem Ankerstab 2 durch das Ankerloch 6 durchschieben zu können, ist ein solches kurzes Schieberohr 9 vorzugsweise axial zumindest in einer Durchsschieberichtung auf dem Ankerstab 2 festgelegt oder festlegbar. Es kann auch ein Ring oder eine Scheibe, der/die beispielsweise nur einen Milimeter oder weniger oder wenige Millimeter dick ist oder der/die beispielsweise nicht dicker als der Spalt zwischen dem Ankerstab 2 und dem Ankerloch 6 ist, zum Durchschieben des Dichtelements 10 durch das Ankerloch 6 auf dem Ankerstab 2 angeordnet sein (nicht dargestellt). Auch ein Ring oder eine Scheibe ist vorzugsweise auf dem Ankerstab 2 axial in der Durchschieberichtung festgelegt oder festlegbar.

Das Dichtelement 10 besteht aus einem nachgiebigen, elastisch und/oder plastisch verformbaren Bauteil, beispielsweise einem Elastomer und weist einen zylinderrohrförmigen Abschnitt 13 und einen hohlkegelstumpfförmigen Abschnitt 14 auf, der an seinem durchmesserkleineren Ende über eine Ringstufe 15 einstückig in den hohlzylinderrohrförmigen Abschnitt 13 übergeht (Figur 2). Der hohlkegelstumpfförmige Abschnitt 14 weitet sich vom hohlzylinderrohrförmigen Abschnitt 13 weg auf einen größten Durchmesser des Dichtelements 10 auf, der größer als ein Durchmesser des Ankerlochs 6 in der Schalhaut 3 des Rahmenschalelements 1 ist. An einem durchmesserkleineren Ende ist ein Durchmesser des hohlkegelstumpfförmigen Abschnitts 14 des Dichtelements 10 nicht größer als der Durchmesser des Ankerlochs 6 in der Schalhaut 3. Ein Durchmesser des zylinderrohrförmigen Abschnitts 13 des Dichtelements 10 ist kleiner. Das Dichtelement 10 wird mit seinem hohlkegelstumpfförmigen Abschnitt 14 dem Widerlager 8 zugewandt auf den Ankerstab 2 geschoben. Eine Wanddicke des Dichtelements 10 ist nicht größer als ein Radiusunterschied zwischen dem Ankerloch 6 in der Schalhaut 3 und im Rahmen 5 des Rahmenschalelements 1 und dem Ankerstab 2. Im Ausführungsbeispiel ist die Wanddicke des Dichtelements 10 nicht größer als ein Radiusunterschied zwischen dem Ankerloch 6 und dem Schieberohr 9, so dass sich das auf den Ankerstab 2 geschobene Dichtelement 10 mit dem auf dem Ankerstab 2 axialfesten Schieberohr 9 durch das Ankerloch 6 im Rahmen 4 und in der Schalhaut 3 des Rahmenschalelements 1 schieben lässt. Beim Durchschieben drückt das Ankerloch 6 im Rahmen 4 und in der Schalhaut 3 den hohlkegelstumpfförmigen Abschnitt 14 des aus einem Elastomer bestehenden, oder auf andere Weise nachgiebigen Dichtelements 10 elastisch oder plastisch zusammen, so dass das Dichtelement 10 durch das Ankerloch 6 im Rahmen 4 und in der Schalhaut 3 des Rahmenschalelements 1 durchgeschoben werden kann. Das Schieberohr 9 wird vor dem Durchstecken des Ankerstabs 2 durch das Ankerloch 6 durch Drehen/Schrauben auf dem Ankerstab 2 so weit vom Widerlager 8 des Ankerstabs 2 entfernt, dass es das Dichtelement 10 vollständig durch die Schalhaut 3 durchschiebt und der hohlkegelstumpfförmigen Abschnitt 14 auf der Vorderseite der Schalhaut 3 aus dem Ankerloch 6 austritt. Aufgrund seiner Elastizität weitet sich der hohlkegelstumpfförmigen Abschnitt 14 des Dichtelements 10 auf einen größeren Durchmesser als dem Durchmesser des Ankerlochs 6 in der Schalhaut 3 auf.

Anschließend werden die gegenüberstehenden Rahmenschalelemente 1 durch Drehen der Mutter 7 zusammen gespannt, das heißt auf ihren vorgesehenen Abstand gebracht. Dabei bewegt das Hüllrohr 11, dessen Ende auf dem hohlzylinderrohrförmigen Abschnitt 13 des Dichtelements 10 sitzt und das gegen die Ringstufe 15 des Dichtelements 10 drückt, das durchmessergrößere Stirnende des hohlkegelstumpfförmigen Abschnitts 14 des Dichtelements 10 in dichtende Anlage an die Vorderseite der Schalhaut 3 des Rahmenschalelements 1. Das Dichtelement 10 dichtet zwischen dem Hüllrohr 11 und der Schalhaut 3 des Rahmenschalelements 1 und damit die Durchführung des Ankerstabs 10 durch das Ankerloch 6 im Rahmenschalelement 1 ab.

Am nicht gezeichneten, gegenüberstehenden Rahmenschalelement der zweihäuptigen Schalung ist ebenfalls ein Dichtelement auf dem Ankerstab 2 angeordnet, das zwischen dem Hüllrohr 11 und dem gegenüberstehenden Rahmenschalelement abdichtet. Dieses Dichtelement kann gleich oder anders ausgebildet sein wie das gezeichnete Dichtelements 10. Das Hüllrohr 11 hält die gegenüberstehenden Rahmenschalelemente 1 in ihrem vorgesehenen Abstand voneinander. Außerdem ermöglicht es die Wiedergewinnung des Ankerstabs 2 durch Herausziehen aus dem Hüllrohr 11 nach einem Abbinden des Betons und Entfernen der Rahmenschalelemente 1, was als Ausschalen bezeichnet wird. Dadurch ermöglicht die Erfindung einen Gewindestab mit durchgehendem Gewinde als wiedergewinnbaren Ankerstab 2 bei einer einseitigen Ankerung.

Beim Drehen des Ankerstabs 2 mit der auf ihm drehfesten Mutter 7 zum Spannen der gegenüberstehenden Rahmenschalelemente 1 dreht sich das Schieberohr 9 nicht mit, wenn sein Bund 12 an der Rückseite des Rahmens 4 des Rahmenschalelements 1 anliegt. Dadurch drückt das Schieberohr 9 das Dichtelement 10 nicht von der Vorderseite der Schalhaut 3 des Rahmenschalelements 1 ab.

## Patentansprüche

1. Verfahren zum Aufstellen einer Betonschalung, die ein Schalelement (1) mit einer Schalhaut (3) aufweist, wobei die Schalhaut (3) ein Ankerloch (6) zu einer Durchführung eines Ankerstabs (2) aufweist, der zu einer zugfesten Verbindung des Schalelements (1) mit einem weiteren, mit Abstand gegenüber aufgestellten Schalelement (1) dient, wobei ein Ankerstab (2) von einer Rückseite durch das Ankerloch (6) in der Schalhaut (3) gesteckt wird, so dass er auf der Vorderseite und der Rückseite der Schalhaut (3) übersteht, wobei auf dem Ankerstab (2) ein rohr- oder ringförmiges, elastisches und/oder plastisches Dichtelement (10) längsverschieblich angeordnet ist, dessen größter Durchmesser größer als ein Durchmesser des Ankerlochs (6) in der Schalhaut (3) ist, wobei das Dichtelement (10) mit dem Ankerstab (2) durch das Ankerloch (6) in der Schalhaut (3) durchtritt, so dass es auf eine Vorderseite der Schalhaut (3) gelangt, wobei das Dichtelement (10) beim Durchtritt durch das Ankerloch (6) in der Schalhaut (3) elastisch zusammengedrückt wird und sich sein größter Durchmesser nach dem Durchtritt durch das Ankerloch (6) in der Schalhaut (3) elastisch auf einen Durchmesser aufweitet, der größer als der Durchmesser des Ankerlochs (6) in der Schalhaut (3) ist, **dadurch gekennzeichnet, dass** auf einer Rückseite des Dichtelements (10) ein Schieberohr (9), ein Ring oder eine Scheibe auf dem Ankerstab (2) angeordnet ist oder wird, dessen/deren Außendurchmesser nicht größer als ein Durchmesser des Ankerlochs (6) in der Schalhaut (3) ist und mit dem das Dichtelement (10) durch das Ankerloch (6) in der Schalhaut (3) gedrückt wird.

2. Verfahren nach Anspruch 1, **dadurch gekennzeichnet, dass** das Dichtelement (10) weiter durch die Schalhaut (3) durchgesteckt wird, als es für das Aufweiten erforderlich ist, und dass das Dichtelement (10) danach zurück in dichtende Anlage an der Schalhaut (3) bewegt wird.

3. Verfahren nach einem der Ansprüche 1 bis 2, **dadurch gekennzeichnet, dass** auf einer Vorderseite des Dichtelements (10) ein Hüllrohr (11) auf dem Ankerstab (2) angeordnet ist, das mit dem Ankerstab (2) von der Rückseite der Schalhaut (3) durch das Ankerloch (6) in der Schalhaut (3) durchgesteckt wird, und dass nach fertiggestellter Verankerung das Dichtelement (10) zwischen dem Hüllrohr (11) und der Schalhaut (3) des Schalelements (1) abdichtet.

4. Verfahren nach Anspruch 2, **dadurch gekennzeichnet, dass** der Ankerstab (2) auf der Rückseite der Schalhaut (3) ein Widerlager (8) zu einer Abstützung an einer Gegenfläche des Rahmenschalelements (1) aufweist, und dass beim Durchstecken des Ankerstabs (2) durch das Ankerloch (6) in der Schalhaut (3) das Schieberohr (9) einen Abstand von dem Widerlager (8) aufweist, bis das Dichtelement (10) auf der Vorderseite der Schalhaut (3) aus dem Ankerloch (6) in der Schalhaut (3) austritt und sich elastisch aufweitet.

5. Dichtungsanordnung mit einem Ankerstab (2), einem Hüllrohr (11), das auf dem Ankerstab (2) angeordnet ist, und mit einem rohr- oder ringförmigen Dichtelement (10) zu einer Abdichtung einer Durchführung des Ankerstabs (2) durch ein Ankerloch (6) in einer Schalhaut (3) eines Schalelements (1) zum Schalen von Beton, wobei das Dichtelement (10) sich zu einem Stirnende hin außen von einem Durchmesser, der nicht größer als ein Durchmesser des Ankerlochs (6) in der Schalhaut (3) ist, auf einen Durchmesser, der größer als der Durchmesser des Ankerlochs (6) in der Schalhaut (3) ist, aufweitet, wobei das Dichtelement (10) radial federnd ist, so dass es sich elastisch auf einen Durchmesser verengen lässt, der nicht größer als der Durchmesser des Ankerlochs (6) in der Schalhaut (3) ist, und dass eine Wanddicke des Dichtelements (10) nicht größer ist als ein halb eines Durchmesserunterschieds zwischen dem Ankerloch (6) in der Schalhaut (3) und dem Ankerstab (2), wobei das Dichtelement (10) einen zylinderrohrförmigen Abschnitt (13), der auf den Ankerstab (2) geschoben ist und dessen Außendurchmesser nicht größer als der Durchmesser des Ankerlochs (6) in der Schalhaut (3) ist, und einen hohlkegelstumpfförmigen Abschnitt (14) aufweist, der sich zu dem einen Stirnende des Dichtelements (10) hin außen von einem Durchmesser, der nicht größer als der Durchmesser des Ankerlochs (6) in der Schalhaut (3) ist, auf einen Durchmesser, der größer als der Durchmesser des Ankerlochs (6) in der Schalhaut (3) ist, aufweitet, wobei das Dichtelement (10) eine Ringstufe (15) aufweist, an der der hohlkegelstumpfförmige Abschnitt (14) an seinem durchmesserkleineren Ende über die Ringstufe (15) einstückig in den hohlzylinderrohrförmigen Abschnitt (13) übergeht, wobei das Hüllrohr (11) gegen die Ringstufe (15) des Dichtelements (10) drückt, **dadurch gekennzeichnet, dass** der zylinderförmige Abschnitt (13) des Dichtelements (10) in das Hüllrohr (11) ragt, und dass die Dichtungsanordnung ein Schieberohr, einen Ring oder eine Scheibe (9) zum Durchschieben des Dichtelements (10) auf dem Ankerstab (2) durch das Ankerloch (6) in der Schalhaut (3) aufweist, dessen/deren Innendurchmesser nicht kleiner als ein Durchmesser des Ankerstabs (2) und dessen/deren Außendurchmesser an mindestens einer Stelle nicht größer als der Durchmesser des Ankerlochs (6) in der Schalhaut (3) ist, aufweist.

6. Dichtungsanordnung nach Anspruch 5, **dadurch gekennzeichnet, dass** das Schieberohr (9), der Ring oder die Scheibe axial auf dem Ankerstab (2) lösbar festgelegt ist.

7. Schalungsanordnung mit einem Ankerstab (2), einem Hüllrohr (11), das auf dem Ankerstab (2) angeordnet ist, und mit einem rohr- oder ringförmigen Dichtelement (10) zu einer Abdichtung einer Durchführung des Ankerstabs (2) durch ein Ankerloch (6) in einer Schalhaut (3) eines Schalelements (1) zum Schalen von Beton, und mit einem eine Schalhaut (3) aufweisenden Schalelement (1), wobei die Schalhaut (3) ein Ankerloch (6) aufweist, durch das ein Ankerstab (2) durchgeführt ist, wobei der Durchmesser des Ankerlochs (6) in der Schalhaut (3) größer als ein Durchmesser des Ankerstabs (2) ist, wobei das Dichtelement (10) sich zu einem Stirnende hin außen von einem Durchmesser, der nicht größer als ein Durchmesser des Ankerlochs (6) in der Schalhaut (3) ist, auf einen Durchmesser, der größer als der Durchmesser des Ankerlochs (6) in der Schalhaut (3) ist, aufweitet, wobei das Dichtelement (10) radial federnd ist, so dass es sich elastisch auf einen Durchmesser verengen lässt, der nicht größer als der Durchmesser des Ankerlochs (6) in der Schalhaut (3) ist, und dass eine Wanddicke des Dichtelements (10) nicht größer ist als ein halb eines Durchmesserunterschieds zwischen dem Ankerloch (6) in der Schalhaut (3) und dem Ankerstab (2), wobei das Dichtelement (10) einen zylinderrohrförmigen Abschnitt (13), der auf den Ankerstab (2) geschoben ist und dessen Außendurchmesser nicht größer als der Durchmesser des Ankerlochs (6) in der Schalhaut (3) ist, und einen hohlkegelstumpfförmigen Abschnitt (14) aufweist, der sich zu dem einen Stirnende des Dichtelements (10) hin außen von einem Durchmesser, der nicht größer als der Durchmesser des Ankerlochs (6) in der Schalhaut (3) ist, auf einen Durchmesser, der größer als der Durchmesser des Ankerlochs (6) in der Schalhaut (3) ist, aufweitet, wobei das Dichtelement (10) das Ankerloch (6) in der Schalhaut (3) umschließend und abdichtend an einer Vorderseite der Schalhaut (3) anliegt, wobei das Hüllrohr (11) auf der Vorderseite der Schalhaut (3) auf dem Ankerstab (2) angeordnet ist und wobei das Dichtelement (10) am Hüllrohr (11) abdichtet.

8. Schalungsanordnung nach Anspruch 7, **dadurch gekennzeichnet, dass** ein Außendurchmesser des Hüllrohrs (11) nicht größer als der Durchmesser des Ankerlochs (6) in der Schalhaut (3) ist.

9. Schalungsanordnung nach Anspruch 7 oder 8, **dadurch gekennzeichnet, dass** der Ankerstab (2) ein Gewindestab mit durchgehendem Gewinde ist.

10. Schalungsanordnung nach einem der Ansprüche 7 bis 9, **dadurch gekennzeichnet, dass** an das Dichtelement (10) anschließend ein Schieberohr (9) zum Durchschieben des Dichtelements (10) durch das Ankerloch (6) in der Schalhaut (3) auf dem Ankerstab (2) angeordnet ist, das das Ankerloch (6) in der Schalhaut (3) durchsetzt.

## Claims

1. A method for setting up a concrete formwork, comprising a formwork element (1) including a formwork shell (3), the formwork shell (3) including a tie hole (6) for leading through a tie rod (2) which is used for a tension-resistant connection of the formwork element (1) to a further formwork element (1) set up at a distance opposite thereof, a tie rod (2) being placed through the tie hole (6) in the formwork shell (3) from a rear side so as to protrude on the front side and the rear side of the formwork shell (3), a tubular or annular, elastic and/or plastic sealing element (10) being disposed on the tie rod (2) in a longitudinally displaceable manner, the largest diameter thereof being greater than a diameter of the tie hole (6) in the formwork shell (3), the sealing element (10), together with the tie rod (2), passing through the tie hole (6) in the formwork shell (3) so as to reach the front side of the formwork shell (3), the sealing element (10) being elastically compressed when passing through the tie hole (6) in the formwork shell (3), and the largest diameter thereof, after passing through the tie hole (6) in the formwork shell (3), elastically expanding to a diameter that is greater than the diameter of the tie hole (6) in the formwork shell (3), **characterized in that**, on the rear side of the sealing element (10), a sliding tube (9), a ring, or a disk is disposed on the tie rod (2), which has an outside diameter that is not greater than a diameter of the tie hole (6) in the formwork shell (3) and by way of which the sealing element (10) is pushed through the tie hole (6) in the formwork shell (3).

2. The method according to claim 1, **characterized in that** the sealing element (10) is placed further through the formwork shell (3) than is necessary for the expansion, and the sealing element (10) thereafter is moved back into sealing contact with the formwork shell (3).

3. The method according to any one of claims 1 to 2, **characterized in that**, on a front side of the sealing element (10), a sleeve (11) is disposed on the tie rod (2) which is placed together with the tie rod (2) through the tie hole (6) in the formwork shell (3), from the rear side of the formwork shell (3) and, after the anchoring has been completed, the sealing element (10) provides sealing between the sleeve (11) and the formwork shell (3) of the formwork element (1).

4. The method according to claim 2, **characterized in that** the tie rod (2) comprises an abutment (8) on the rear side of the formwork shell (3) for support on a counter surface of the panel formwork element (1) and, as the tie rod (2) is placed through the tie hole (6) in the formwork shell (3), the sliding tube (9) has a distance with respect to the abutment (8) until the sealing element (3) exits the tie hole (6) in the formwork shell (3) on the front side of the formwork shell (3) and elastically expands.

5. A sealing system comprising a tie rod (2), a sleeve (11), which is disposed on the tie rod (2), and further comprising a tubular or annular sealing element (10) for sealing a lead-through for the tie rod (2) through a tie hole (6) in a formwork shell (3) of a formwork element (1) for concrete formwork, the sealing element (10) expanding on the outside, toward an end face, from a diameter that is not greater than a diameter of the tie hole (6) in the formwork shell (3) to a diameter that is greater than the diameter of the tie hole (6) in the formwork shell (3), the sealing element (10) being radially resilient so as to be elastically constrictable to a diameter that is not greater than the diameter of the tie hole (6) in the formwork shell (3), and a wall thickness of the sealing element (10) being not greater than one half the difference in diameter between the tie hole (6) in the formwork shell (3) and the tie rod (2), the sealing element (10) comprising a cylindrical tube-shaped section (13), which is pushed onto the tie rod (2), the outside diameter of which is not greater than the diameter of the tie hole (6) in the formwork shell (3), and a hollow truncated cone-shaped section (14), which expands on the outside, toward the one end face of the sealing element (10), from a diameter that is not greater than the diameter of the tie hole (6) in the formwork shell (3) to a diameter that is greater than the diameter of the tie hole (6) in the formwork shell (3), the sealing element (10) comprising an annular step (15), at which the hollow truncated cone-shaped section (14), at the end thereof having the smaller diameter, transitions in one piece into the hollow cylindrical tube-shaped section (13) by way of the annular step (15), and the sleeve (11) pushing against the annular step (15) of the sealing element (10), **characterized in that** the cylindrical section (13) of the sealing element (10) protrudes into the sleeve (11), and the sealing system comprises a sliding tube, a ring or a disk (9) for pushing the sealing element (10) on the tie rod (2) through the tie hole (6) in the formwork shell (3), having an inside diameter that is not smaller than a diameter of the tie rod (2) and having an outside diameter that, in at least one area, is not greater than the diameter of the tie hole (6) in the formwork shell (3).

6. The sealing system according to claim 5, **characterized in that** the sliding tube (9), the ring or the disk can be axially detachably secured on the tie rod (2).

7. A formwork system comprising a tie rod (2), a sleeve (11), which is disposed on the tie rod (2), and further comprising a tubular or annular sealing element (10) for sealing a lead-through for the tie rod (2) through a tie hole (6) in a formwork shell (3) of a formwork element (1) for concrete formwork, and further comprising a formwork element (1) including a formwork shell (3), the formwork shell (3) including a tie hole (6) through which a tie rod (2) is guided, the diameter of the tie hole (6) in the formwork shell (3) being greater than a diameter of the tie rod (2), the sealing element (10) expanding on the outside, toward an end face, from a diameter that is not greater than a diameter of the tie hole (6) in the formwork shell (3) to a diameter that is greater than the diameter of the tie hole (6) in the formwork shell (3), the sealing element (10) being radially resilient so as to be elastically constrictable to a diameter that is not greater than the diameter of the tie hole (6) in the formwork shell (3), and a wall thickness of the sealing element (10) being not greater than one half the difference in diameter between the tie hole (6) in the formwork shell (3) and the tie rod (2), the sealing element (10) comprising a cylindrical tube-shaped section (13), which is pushed onto the tie rod (2), the outside diameter of which is not greater than the diameter of the tie hole (6) in the formwork shell (3), and further comprising a hollow truncated cone-shaped section (14), which expands on the outside, toward the one end face of the sealing element (10), from a diameter that is not greater than the diameter of the tie hole (6) in the formwork shell (3) to a diameter that is greater than the diameter of the tie hole (6) in the formwork shell (3), the sealing element (10) surrounding the tie hole (6) in the formwork shell (3) and sealingly resting against a front side of the formwork shell (3), the sleeve (11) being disposed on the tie rod (2) on the front side of the formwork shell (3), and the sealing element (10) providing sealing on the sleeve (11).

8. The formwork system according to claim 7, **characterized in that** an outside diameter of the sleeve (11) is not greater than the diameter of the tie hole (6) in the formwork shell (3).

9. The formwork system according to claim 7 or 8, **characterized in that** the tie rod (2) is a threaded rod having a continuous thread.

10. The formwork system according to any one of claims 7 to 9, **characterized in that**, adjoining the sealing element (10), a sliding tube (9), extending through the tie hole (6) in the formwork shell (3), is disposed on the tie rod (2) for pushing the sealing element (10) through the tie hole (6) in the formwork shell (3).

## Revendications

1. Procédé de mise en place d'un coffrage à béton, qui présente un élément de coffrage (1) avec une peau de coffrage (3), la peau de coffrage (3) présentant un trou d'ancrage (6) pour un passage d'une tige d'ancrage (2) qui sert à une liaison résistante à la traction de l'élément de coffrage (1) avec un autre élément de coffrage (1) placé à une distance au-dessus, une tige d'ancrage (2) étant enfichée par un côté arrière à travers le trou d'ancrage (6) dans la peau de coffrage (3), de telle sorte qu'elle dépasse sur le côté avant et le côté arrière de la peau de coffrage (3),
un élément d'étanchéité (10) élastique et/ou plastique, tubulaire ou annulaire, étant agencé sur la tige d'ancrage (2) de manière à pouvoir coulisser longitudinalement, dont le diamètre maximal est supérieur à un diamètre du trou d'ancrage (6) dans la peau de coffrage (3), l'élément d'étanchéité (10) avec la tige d'ancrage (2) traversant le trou d'ancrage (6) dans la peau de coffrage (3), de telle sorte qu'il arrive sur un côté avant de la peau de coffrage (3), l'élément d'étanchéité (10) étant compressé élastiquement lors du passage à travers le trou d'ancrage (6) dans la peau de coffrage (3) et son diamètre maximal s'élargissant élastiquement après le passage à travers le trou d'ancrage (6) dans la peau de coffrage (3) jusqu'à un diamètre qui est supérieur au diamètre du trou d'ancrage (6) dans la peau de coffrage (3), **caractérisé en ce que**, sur un côté arrière de l'élément d'étanchéité (10), un tube coulissant (9), une bague ou une rondelle est ou sera agencé(e) sur la tige d'ancrage (2), dont le diamètre extérieur n'est pas supérieur à un diamètre du trou d'ancrage (6) dans la peau de coffrage (3) et avec lequel l'élément d'étanchéité (10) est pressé à travers le trou d'ancrage (6) dans la peau de coffrage (3).

2. Procédé selon la revendication 1, **caractérisé en ce que** l'élément d'étanchéité (10) est enfoncé à travers la peau de coffrage (3) plus loin qu'il n'est nécessaire pour l'élargissement, et **en ce que** l'élément d'étanchéité (10) est ensuite ramené en application d'étanchéité sur la peau de coffrage (3).

3. Procédé selon l'une quelconque des revendications 1 à 2, **caractérisé en ce que,** sur un côté avant de l'élément d'étanchéité (10) est agencé un tube d'enveloppe (11) sur la tige d'ancrage (2), qui est enfoncé avec la tige d'ancrage (2) par le côté arrière de la peau de coffrage (3) à travers le trou d'ancrage (6) dans la peau de coffrage (3), et **en ce qu'**une fois l'ancrage terminé, l'élément d'étanchéité (10) assure l'étanchéité entre le tube d'enveloppe (11) et la peau de coffrage (3) de l'élément de coffrage (1).

4. Procédé selon la revendication 2, **caractérisé en ce que** la tige d'ancrage (2) présente sur le côté arrière de la peau de coffrage (3) un contre-appui (8) pour un appui sur une contre-surface de l'élément de coffrage de cadre (1), et **en ce que**, lors de l'enfoncement de la tige d'ancrage (2) à travers le trou d'ancrage (6) dans la peau de coffrage (3), le tube coulissant (9) présente une distance par rapport au contre-appui (8) jusqu'à ce que l'élément d'étanchéité (10) sur le côté avant de la peau de coffrage (3) sorte du trou d'ancrage (6) dans la peau de coffrage (3) et s'élargisse élastiquement.

5. Agencement d'étanchéité avec une tige d'ancrage (2), un tube d'enveloppe (11) agencé sur la tige d'ancrage (2) et avec un élément d'étanchéité tubulaire ou annulaire (10) pour assurer l'étanchéité d'un passage de la tige d'ancrage (2) à travers un trou d'ancrage (6) dans une peau de coffrage (3) d'un élément de coffrage (1) pour le coffrage de béton, l'élément d'étanchéité (10) s'étendant vers une extrémité frontale à l'extérieur d'un diamètre qui n'est pas supérieur à un diamètre du trou d'ancrage (6) dans la peau de coffrage (3), jusqu'à un diamètre qui est supérieur au diamètre du trou d'ancrage (6) dans la peau de coffrage (3), l'élément d'étanchéité (10) étant radialement élastique, de telle sorte qu'il peut se rétrécir élastiquement à un diamètre qui n'est pas supérieur au diamètre du trou d'ancrage (6) dans la peau de coffrage (3), et en ce qu'une épaisseur de paroi de l'élément d'étanchéité (10) n'est pas supérieure à la moitié d'une différence de diamètre entre le trou d'ancrage (6) dans la peau de coffrage (3) et la tige d'ancrage (2), l'élément d'étanchéité (10) présentant une section (13) en forme de tube cylindrique, qui est enfilée sur la tige d'ancrage (2) et dont le diamètre extérieur n'est pas supérieur au diamètre du trou d'ancrage (6) dans la peau de coffrage (3), et une section en forme de cône tronqué creux (14) qui s'élargit vers une extrémité frontale de l'élément d'étanchéité (10) à l'extérieur d'un diamètre qui n'est pas supérieur au diamètre du trou d'ancrage (6) dans la peau de coffrage (3), jusqu'à un diamètre qui est supérieur au diamètre du trou d'ancrage (6) dans la peau de coffrage (3), l'élément d'étanchéité (10) présentant un gradin annulaire (15), au niveau duquel la section en forme de cône tronqué creux (14) se transforme, à son extrémité de plus petit diamètre, d'un seul tenant en la section en forme de tube cylindrique creux (13) par l'intermédiaire du gradin annulaire (15), le tube d'enveloppe (11) étant pressé contre le gradin annulaire (15) de l'élément d'étanchéité (10), **caractérisé en ce que** la section cylindrique (13) de l'élément d'étanchéité (10) fait saillie dans le tube d'enveloppe (11), et **en ce que** l'agencement d'étanchéité présente un tube coulissant, une bague ou une rondelle (9) pour faire passer l'élément d'étanchéité (10) sur la tige d'ancrage (2) à travers le trou d'ancrage (6) dans la peau de coffrage (3), dont le diamètre intérieur n'est pas inférieur à un diamètre de la tige d'ancrage (2) et dont le diamètre extérieur n'est pas supérieur au diamètre du trou d'ancrage (6) dans la peau de coffrage (3) en au moins un endroit.

6. Agencement d'étanchéité selon la revendication 5, **caractérisé en ce que** le tube coulissant (9), la bague ou la rondelle est fixé(e) de manière amovible axialement sur la tige d'ancrage (2).

7. Agencement de coffrage avec une tige d'ancrage (2), un tube d'enveloppe (11) agencé sur la tige d'ancrage (2) et avec un élément d'étanchéité (10) tubulaire ou annulaire pour assurer l'étanchéité d'un passage de la tige d'ancrage (2) à travers un trou d'ancrage (6) dans une peau de coffrage (3) d'un élément de coffrage (1) pour le coffrage de béton, et avec un élément de coffrage (1) présentant une peau de coffrage (3), la peau de coffrage (3) présentant un trou d'ancrage (6) à travers lequel une tige d'ancrage (2) est passée, le diamètre du trou d'ancrage (6) dans la peau de coffrage (3) étant supérieur à un diamètre de la tige d'ancrage (2), l'élément d'étanchéité (10) s'élargissant vers une extrémité frontale à l'extérieur d'un diamètre qui n'est pas supérieur à un diamètre du trou d'ancrage (6) dans la peau de coffrage (3) jusqu'à un diamètre qui est supérieur au diamètre du trou d'ancrage (6) dans la peau de coffrage (3), l'élément d'étanchéité (10) étant radialement élastique, de telle sorte qu'il peut se rétrécir élastiquement à un diamètre qui n'est pas supérieur au diamètre du trou d'ancrage (6) dans la peau de coffrage (3), et en ce qu'une épaisseur de paroi de l'élément d'étanchéité (10) n'est pas supérieure à la moitié d'une différence de diamètre entre le trou d'ancrage (6) dans la peau de coffrage (3) et la tige d'ancrage (2), l'élément d'étanchéité (10) présentant une section en forme de tube cylindrique (13) qui est enfilée sur la tige d'ancrage (2) et dont le diamètre extérieur n'est pas supérieur au diamètre du trou d'ancrage (6) dans la peau de coffrage (3), et une section en forme de cône tronqué creux (14) qui s'élargit vers une extrémité frontale de l'élément d'étanchéité (10) à l'extérieur d'un diamètre qui n'est pas supérieur au diamètre du trou d'ancrage (6) dans la peau de coffrage (3) jusqu'à un diamètre qui est supérieur au diamètre du trou d'ancrage (6) dans la peau de coffrage (3), l'élément d'étanchéité (10) s'appliquant contre un côté avant de la peau de coffrage (3) en assurant l'étanchéité et en entourant le trou d'ancrage (6) dans la peau de coffrage (3), le tube d'enveloppe (11) étant agencé sur la tige d'ancrage (2) sur le côté avant de la peau de coffrage (3) et l'élément d'étanchéité (10) assurant l'étanchéité contre le tube d'enveloppe (11).

8. Agencement de coffrage selon la revendication 7, **caractérisé en ce qu'**un diamètre extérieur du tube d'enveloppe (11) n'est pas supérieur au diamètre du trou d'ancrage (6) dans la peau de coffrage (3).

9. Agencement de coffrage selon la revendication 7 ou 8, **caractérisé en ce que** la tige d'ancrage (2) est une tige filetée avec un filetage continu.

10. Agencement de coffrage selon l'une quelconque des revendications 7 à 9, **caractérisé en ce qu'**un tube coulissant (9) pour faire passer l'élément d'étanchéité (10) à travers le trou d'ancrage (6) dans la peau de coffrage (3) est agencé sur la tige d'ancrage (2) à la suite de l'élément d'étanchéité (10) et traverse le trou d'ancrage (6) dans la peau de coffrage (3).
